(19) Europäisches Patentamt
European Patent Office
Office européen des brevets

(11) Numéro de publication: 0 184 965
B1

# (12) FASCICULE DE BREVET EUROPÉEN

(45) Date de publication du fascicule du brevet: 04.01.89

(21) Numéro de dépôt: 85420180.3

(22) Date de dépôt: 10.10.85

(51) Int. Cl.[4]: C 08 L 83/07 // C09D3/82 ,(C08L83/07, 83:05, C08K5:23)

## (54) Composition organopolysiloxanique de revêtement utilisable notamment pour le traitement antiadhérent et son procédé d'application.

(30) Priorité: 15.10.84 FR 8415745

(43) Date de publication de la demande: 18.06.86 Bulletin 86/25

(45) Mention de la délivrance du brevet: 04.01.89 Bulletin 89/1

(84) Etats contractants désignés: AT BE CH DE FR GB IT LI LU NL SE

(56) Documents cité:
EP-A-0 051 384
FR-A-1 057 151
FR-A-1 538 058
FR-A-2 204 657

(73) Titulaire: RHONE- POULENC CHIMIE, 25, quai Paul Doumer, F-92408 Courbevoie Cédex (FR)

(72) Inventeur: Cavezzan, Jacques Résidence du Parc Tête d'Or, 4, Allée Marcel Achard, F-69100 Villeurbanne (FR)
Inventeur: Soula, Gérard, 33, rue Nungesser, F-69330 Meyzieu (FR)

(74) Mandataire: Seugnet, Jean Louis, RHONE-POULENC INTERSERVICES Service Brevets Chimie Centre de Recherches de Saint- Fons B.P. 62, F-69192 Saint- Fons Cédex (FR)

EP 0 184 965 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

**Description**

La présente invention concerne une composition organopolysiloxanique, de revêtement utilisable notamment pour le traitement antiadhérent et son procédé d'application, comportant un nouvel inhibiteur et particulièrement utile dans la fabrication de papier et d'autres articles portant des revêtements pelables.

On utilise depuis longtemps des compositions organopolysiloxaniques pour rendre des surfaces non adhérentes à des matériaux auxquels elles adhéreraient normalement.

Ces compositions connues comportent:

(1) un organopolysiloxane comportant des groupes hydrocarbonés à insaturation aliphatique alcényle ou acétylénique, en particulier des groupes vinyle liés aux atomes de silicium
(2) un organohydrogénopolysiloxane
(3) un catalyseur d'un métal du groupe du platine
(4) un inhibiteur retardant à température ambiante la fixation sur un groupe à insaturation aliphatique d'un atome d'hydrogène lié à un atome de silicium, ou la réaction d'un groupe Silanol sur un groupe = SiH.

Ces compositions, après application sur un support durcissent sous l'effet d'apport d'énergie par un traitement approprié (traitement thermique, traitement aux rayons ultra-violet (U.V.), infra-rouges, rayonnement ionisant, etc...).

De telles compositions diluées ou non dans un solvant sont, par exemple, décrites dans les brevets français FR-A-2 128 520, FR-A-2 291 254, FR-A-2 372 874 et FR-A-2 456 767.

Ces compositions sont en général conservées avant emploi sous forme de compositions bicomposantes ou à 2 emballages, les 2 composantes sont mélangés juste avant leur utilisation sous forme de composition unique et le problème principal à résoudre consiste à éviter une gélification prématurée du mélange durant un temps le plus long possible tout en conservant une très bonne réactivité du bain, lors du traitement de la réticulation de la composition.

On a déjà proposé dans l'art antérieur de très nombreux inhibiteurs des catalyseurs du groupe du platine, ces inhibiteurs pouvant être utilisés seuls ou en combinaison et répondant partiellement aux buts visés par la présente invention.

On a ainsi notamment proposé des alkylthiourées (brevet US-A-3 188 299), des triallylisocyanurates (brevet US-A-3 882 083), des dialkylacétylènedicarboxylates (brevet US-A-4 347 346), un alkylvinylsiloxane linéaire ou cyclique comme décrit dans les brevets US-A- 3 516 946 et US-A-3 775 452.

Dans le brevet US-A-3 445 420 on a proposé comme inhibiteur un composé organique acétylénique ayant un point d'ébullition d'au moins 25°C et au moins un groupement - C ≡ C - ; des inhibiteurs de ce type sont également décrits dans le brevet européen EP-A-94 185.

Dans le brevet français FR-A-2 456 767, on a proposé des esters carboxyliques de dialkyle comme le maléate de diallyle.

Les inhibiteurs de l'art antérieur ont permis de faire progresser la technique des traitements anti-adhérents, mais ils présentent au moins l'un des inconvénients ci-dessous.

- la durée de vie en pot "pot life" ou vie de bain "bath-life" est insuffisante
- les inhibiteurs utilisés sont des produits toxiques et/ou lacrymogènes et/ou onéreux
- la réticulation doit être effectuée à des températures trop élevées
- la réticulation est insuffisante et la couche obtenue n'a pas les propriétés visées.

La présente invention propose une composition organopolysiloxanique de revêtement, plus particulièrement utilisable pour le traitement antiadhérent, présentant un inhibiteur original conférant à la composition des propriétés tout à fait remarquables, lui permettant de ne pas présenter les inconvénients mentionnés ci-dessus ou tout du moins sous une forme très atténuée.

La présente invention concerne en effet une composition organopolysiloxanique comprenant:

(1) au moins un organopolysiloxane sensiblement linéaire présentant une viscosité comprise entre environ 50 et 100 000 mPa.s à 25°C et contenant par molécule au moins x groupes hydrocarbonés à insaturation alcényle, de préférence vinyle liés à un atome de silicium avec $x \geqslant 2$
(2) au moins un organohydrogénopolysiloxane ayant une viscosité comprise entre environ 10 et 100 000 mPa.s. à 25°C contenant par molécule au moins y atomes d'hydrogène liés à un atome de silicium avec $y \geqslant 2$ et $x + y \geqslant 5$
(3) une quantité catalytiquement efficace d'un composé d'un métal du groupe du platine
(4) une quantité d'au moins un inhibiteur azodicarboxylate efficace pour inhiber la formation d'un gel à température ambiante mais en quantité insuffisante pour empêcher la réticulation lors du traitement de réticulation et présentant sur chacun des groupes carboxylates un radical organique n'exerçant pas d'influence défavorable sur l'activité catalytique du composé (3) et présentant de préférence un point d'ébullition d'au moins 25°C. Les inhibiteurs qui sont des produits solides à température ambiante 25°C sont également utilisables s'ils sont solubles dans un solvant organique compatible avec les compositions organosiloxaniques comme l'hexane, le toluène, le chlorobenzène etc... Un radical organique convenant plus particulièrement est un radical alkyle.

L'azodicarboxylate peut répondre de préférence à la formule:

$R_1OOC - N = N - COOR_2$ (I)

dans laquelle $R_1$ et $R_2$ identiques ou différents représentent un radical alkyle linéaire ou ramifié ayant de 1 à 12 atomes de carbone, de préférence de 1 à 4 atomes.

Les produits répondant à la formule (I) sont pour la plupart des produits connus dont le procédé de préparation est notamment décrit par Ingold et Weaver J. Chem. Soc. vol. 127 p. 378-387, cité comme référence ou l'on décrit plus spécialement la synthèse de l'azodicarboxylate d'éthyle.

Les inhibiteurs préférentiellement choisis sont l'azodicarboxylate d'éthyle et l'azodicarboxylate de méthyle.

La partie active de l'inhibiteur étant le groupement -OOC-N = N-COO-, comme expliqué plus en détail ci-après, l'invention recouvre les produits chimiques comportant ces groupements et répondant à la définition ci-dessus comme par exemple les bisazodicarboxylates d'alkyle de formule:

$R'_1OOC-N = N-COO-R-OOC-N = N-COOR'_2$ (II)

dans laquelle $R'_1$ et $R'_2$ ont la même signification que ci-dessus et -R- est une chaîne alkylène de formule $-(CH_2)-_n$ avec n étant un nombre entier compris entre 1 et 12.

La synthèse de ces produits est décrite par Norman Rabjohn, Journal of the American Chemical Society, mars 1948, vol. 70, p. 1181-1183 cité comme référence.

Le composé (1) est un organopolysiloxane sensiblement linéaire qui est de préférence un polydiorganosiloxane renfermant de 1,9 à 2,1 radicaux organiques par atome de silicium et ayant par molécules au moins $x \geqslant 2$ radicaux hydrocarbonés à insaturation alcényle, de préférence vinyle.

Les autres radicaux dans le polydiorganosiloxane peuvent être de n'importe quel type de radical organique exempt d'insaturation aliphatique pourvu qu'ils n'exercent pas d'influence défavorable sur l'activité catalytique du constituant (3) de la composition. Les autres radicaux peuvent être, par conséquent, par exemple, des radicaux alcoyles ou cycloalcoyles, tels que éthyle, propyle, décyle, tétradécyle, éicosyle et cyclohexyle; des radicaux aryles, tels que phényle et naphtyle; et des radicaux hydrocarbonés halogénés, tels que bromophényle et 3,3,3-trifluoropropyle.

De préférence, au moins 60 % molaire des radicaux R sont méthyle. Le composé (1) a une viscosité à 25°C de 50 mPa.s jusqu'à la viscosité d'une gomme (environ 100 000 mPa.s).

Par "sensiblement linéaire", on entend un polymère ou un copolymère à chaîne droite ou en partie ramifiée.

Les groupes à insaturation alcényle, de préférence vinyle, peuvent être à l'extrémité de la chaîne du polymère, dans la chaîne ou les deux à la fois. Le composé (1) ne contient de préférence que des radicaux méthyle et vinyle.

Les composés (1) sont bien connus et sont décrits notamment dans les brevets US-A-3 220 972, US-A-3 344 111 et US-A-3 434 366.

Des exemples de composés (1) sont le polydiméthylsiloxane à extrémités diméthylvinylsiloxy, le copolymère polydiméthylpolyméthylvinylsiloxane à extrémités diméthylvinylsiloxy, le copolymère polydiméthylpolyméthylvinylsiloxane à extrémités triméthylsiloxy.

La teneur en groupe vinyle ne dépasse pas 10 % en poids, de préférence 3 % en poids pour les polyméres formés uniquement de radicaux vinyle et méthyle.

Le composé (2) est un organohydrogénopolysiloxane linéaire ou cyclique ayant une viscosité comprise entre 10 et 100 000 mPa.s. Il comporte au moins y groupements $\equiv$ SiH par molécule avec $y \geqslant 2$, de préférence $y \geqslant 3$ et $x + y \geqslant 5$.

La teneur en poids des atomes d'hydrogène liés au silicium ne dépasse pas 1,67 et est de préférence comprise entre 0,1 et 1,6 % pour les polymères ne comportant que les groupements $\equiv$ SiH et $\equiv$ $Si-CH_3$.

Les valences du silicium qui ne sont pas saturées par des atomes d'hydrogène et des atomes d'oxygène du siloxane sont saturées, de préférence par des groupes méthyle, éthyle, et/ou phényle.

Les groupements $\equiv$ SiH peuvent se situer à l'intérieur ou aux extrémités ou à l'intérieur et aux extrémités de l'organohydrogénopolysiloxane.

On peut par exemple citer le polyméthylhydrogénosiloxane à extrémité triméthylsiloxy, le copolymère polydiméthylpolyméthylhydrogénosiloxane à extrémité triméthylsiloxy, le copolymère polydiméthylpolyméthylhydrogénosiloxane à extrémité hydrogénodiméthylsiloxy.

Les composés (2) sont bien connus et sont par exemple décrits dans les brevets US-A-3 220 972, US-A-3 341 111 et US-A-3 436 366 et US-A-3 697 473. On trouvera en particulier des renseignements détaillés sur les méthylhydrogénopolysiloxanes qui sont les composés (2) préférés à la colonne 4 du brevet US-A-3 697 473.

La somme du nombre de groupes à insaturation (alcényle, de préférence vinyle) par molécule de composé (1) et du nombre de groupements $\equiv$ SiH par molécule de composé (2) doit être égale ou supérieure à 5 de façon à obtenir un réticulat lors de la réticulaton de la composition organopolysiloxanique.

Le rapport du nombre des groupements $\equiv$ SiH aux groupements vinyle est supérieur généralement à 0,4 et généralement inférieur à 2 et est compris de préférence entre 0,7 et 1,4.

Dans les applications de revêtement et plus particulièrement dans les applications pour l'antiadhérence du papier, on peut utiliser pour 100 parties en poids de composé (1) de 0,1 à 50 parties en poids de composé (2) et de 0,01 à 3 parties de préférence de 0,04 à 0,5 parties en poids de composé (4).

On peut utiliser comme catalyseur (3) des complexes d'un métal du groupe de platine, notamment les complexes de platine-oléfine comme décrit dans les brevets US-A-3 159 601 et US-A-3 159 662, les produits de réaction des dérivés du platine avec des alcools des aldéhydes et des éthers décrits dans le brevet US-A-3 220 972, les catalyseurs platine-vinylsiloxane décrits dans les brevets français FR-A-1 313 846 et son addition 88 676 et le brevet français FR-A-1 480 409 ainsi que les complexes décrits dans les brevets US-A-3 715 334, US-A-3 775 452 et US-A-3 814 730, un catalyseur au rhodium tel que décrit dans les brevets US-A-3 296 291 et US-A-3 928 629.

Les métaux préférés du groupe du platine sont le platine et le rhodium; le ruthénium bien que moins actif mais moins cher, est également utilisable.

Les inhibiteurs selon l'invention donnent des résultats particulièrement intéressants avec des complexes platine-vinylsiloxane, en particulier le complexe de divinyl-1,3 tétraméthyl-1,1,3,3 disiloxane et des complexes platine-méthylvinylcyclotétrasiloxane, en particulier le complexe platine tétraméthyl-1,3,5,7 tétravinyl-1,3,5,7 cyclotétrasiloxane.

La quantité de complexes de catalyseur (3) et d'inhibiteur (4) à ajouter est fonction notammment des compositions, du type de catalyseur et de l'application visée et, l'homme de métier n'aura aucune difficulté à déterminer cette quantité. De façon générale, pour des compositions de revêtement, la teneur en catalyseur est comprise entre environ 5 et 1000 ppm, de préférence entre 20 et 100 ppm (calculés en poids de métal précieux).

On a découvert, conformément à l'invention, que de très petites quantités d'inhibiteur (4) permettent d'allonger de façon exceptionnelle la "vie en pot" (pot-life) dans des compositions sans solvant destinées au traitement de l'anti-adhérence papier sans pour cela affecter le temps de durcissement de la composition à chaud, ces compositions étant conservées à température ambiante ordinaire, c'est-à-dire inférieure à 40 - 45° C, de préférence inférieure à 25° C.

Sans être lié par une théorie scientifique, on peut expliquer les propriétés extrèmement avantageuses de l'inhibiteur selon l'invention de la façon suivante:

L'inhibiteur (4) selon l'invention présente en effet un mode de complexation avec le catalyseur complètement différent des autres inhibiteurs connus. Ainsi, lors de l'établissement d'un spectre par résonance magnétique nucléaire (RMN) du $^{195}Pt$, un complexe catalyseur-inhibiteur (par exemple, dans le cas où l'inhibiteur est le maléate de méthyle décrit dans le brevet français FR-A-2 456 767) fait apparaître un signal caractéristique de la formation d'un complexe diamagnétique.

Or un tel signal par RMN du $^{195}Pt$ n'apparaît pas quand l'inhibiteur (4) est un ester azodicarboxylique. Par contre, un signal apparaît lors de l'établissement d'un spectre par résonance paramagnétique électronique (RPE) qui met en évidence la formation d'un complexe paramagnétique du platine, ce signal n'apparaissant pas avec les inhibiteurs connus, en particulier le maléate de méthyle.

Ce complexe paramagnétique devient diamagnétique après irradiation U.V., le platine est activé et l'azodicarboxylate est transformé en hydrazine correspondante. Le complexe paramagnétique se forme pour les faibles degrés d'oxydation du platine, et plus précisément pour les degrés d'oxydation 0 et II, dans le composé catalytique (3) tel que défini ci-dessus.

L'intérêt majeur de la formation de ce complexe paramagnétique est que, contrairement aux complexes diamagnétiques, il est beaucoup plus stable, en particulier à température élevée.

Par conséquent, la vie en pot ou la vie en bain des compositions ainsi inhibée est plus importante. Pour détruire le complexe paramagnétique et activer le catalyseur, il est nécessaire de transformer le complexe paramagnétique en complexe diamagnétique, de préférence en soumettant la composition organopolysiloxanique, disposée de préférence en couche mince, à un rayonnement U.V. et à éventuellement parfaire la réticulation de cette couche par les moyens connus en particulier par un traitement thermique compris entre 80 et 180° C, généralement entre 90 et 120° C. Toutefois pour les faibles teneurs en inhibiteurs et pour les épaisseurs de revêtements supérieurs à 20 µm un traitement thermique peut suffire.

Lors de ce traitement par U.V. le complexe paramagnétique est déjà en soi photosensibilisateur, ne serait-ce que par sa composante catalytique (3) comme déjà décrit dans le brevet français FR-A-2 183 125 et il est généralement superflu de rajouter à la composition organopolysiloxanique un photosensibilisateur du type benzophénone ou anthraquinone ou éther de benzoïne.

Le rayonnement U.V. utilisé présente une longueur d'onde comprise entre 200 et 400 nanomètres, de préférence de l'ordre de 254 nanomètres, et 360 nanomètres.

La durée d'irradiation peut être très courte et inférieure à 1 s.

La présente invention vise donc également un procédé de réticulation d'un composition de revêtement disposée en couche mince, conforme à la présente invention, caractérisé en ce qu'au moins une partie de l'apport d'énergie pour la réticulation est fournie par un rayonnement U.V.

Par couche mince, on entend selon l'invention une couche d'épaisseur comprise entre 0,1 et 500 µm, de préférence entre 0,5 et 20 µm.

Les compositions de l'invention présentent généralement une forte inhibition au durcissement quand elles sont utilisées telles quelles ou diluées dans un solvant. Quand elles sont dispersées ou diluées dans un solvant, on utilise un solvant organique volatile compatible avec la composition, choisi par exemple parmi les alcanes, les coupes pétrolières renfermant des composés paraffiniques, le toluène, l'heptane, le xylène, l'isopropanol, la méthylisobutylcétone, le tétrahydrofuranne, le chlorobenzène, le chloroforme, le 1,1,1-trichloroéthane, les dérivés du monoéthylèneglycol et de méthylèneglycol.

De préférence, le solvant forme de 50 à 99 % en poids de la dispersion.

Par traitement par un rayonnement U.V. et par évaporation du solvant de la dispersion, la composition durcit et ces dispersions sont donc utiles comme compositions de revêtement pour des objets en métal, bois, verre et des feuilles souples en papier, matière plastique etc...

Les compositions selon l'invention sont de préférence utilisées comme composition sans solvant pour rendre un matériau non adhérent, tel que des feuilles métalliques, du verre, des matières plastiques ou du papier, à d'autres matériaux auxquels il adhérerait normalement et, dans le cas d'une composition sans solvant, la composition présente avantageusement une viscosité ne dépassant pas 5000 mPa.s., de préférence comprise entre 20 et 4000 mPa.s. à 25° C.

L'invention vise donc également un procédé permettant de rendre des feuilles de matériau souple non adhérentes à des surfaces auxquelles elles adhérent normalement, procédé caractérisé en ce qu'il consiste à appliquer une quantité de composition conforme à l'invention comprise généralement entre 0,1 et 5 g par $m^2$ de surface à enduire et à réticuler la composition par apport d'énergie dont au moins une partie est fournie par un rayonnement U.V.

Les temps de gélification de ces compositions diluées ou non à température ambiante peuvent être supérieurs à 24 heures le plus souvent plusieurs jours et le catalyseur est réactivé à température plus élevée dépassant généralement 80° C, et comprise entre 90 et 120° C, en présence d'U.V.

Les compositions sans solvant, c'est-à-dire non diluées, sont appliquées à l'aide de dispositifs aptes à déposer, d'une façon uniforme, de faibles quantités de liquides. On peut utiliser à cet effet par exemple le dispositif nommé "Helio glissant" comportant en particulier 2 cylindres superposés: le rôle du cylindre placé le plus bas, plongeant dans le bac d'enduction où se trouvent les compositions, est d'imprégner en une couche très mince le cylindre placé le plus haut, le rôle de ce dernier est alors de déposer sur le papier les quantités désirées des compositions dont il est imprégné, un tel dosage est obtenu par règlage de la vitesse respective des deux cylindres qui tournent en sens inverse l'un de l'autre.

Les compositions diluées, c'est-à-dire avec solvant peuvent être appliquées à l'aide des dispositifs utilisés sur les machines industrielles d'enduction du papier telles que le cylindre gravé "Mille points", le système nommé "Reverse Roll". Une fois déposées sur les supports, les compositions sont durcies par apport d'énergie, dont au moins une partie est fournie par un rayonnement U.V., en quelques secondes par circulation sous une lumière U.V. et dans des fours-tunnels chauffés vers 60 - 200° C; le temps de passage dans ces fours varie généralement de 2 à 30 secondes. Il est fonction, pour une longueur donnée des fours, de la vitesse à laquelle circulent les supports enduits (cette vitesse peut dépasser 200 mètres par minute); généralement un support constitué de matériaux cellulosiques circulent plus rapidement (par exemple à la vitesse de 3 m/seconde pour une température supérieure à 140° C) qu'un support à base de matière plastique. En effet ce dernier ne peut subir l'action de températures élevées, il sera donc soumis à une température plus basse, mais pendant une durée plus longue, par exemple il circulera à la vitesse de 0,75 m/seconde pour une température de l'ordre de 80° C.

L'irradiation préalable aux U.V. peut être effectuée par passage préalable du papier sous au moins une lampe U.V.

Les quantités de compositions déposées sur les supports sont variables et s'échelonnent le plus souvent entre 0,1 et 5 g/$m^2$ de surface traitée. Ces quantités dépendent de la nature des supports et des propriétés antiadhérentes recherchées. Elles sont le plus souvent comprises entre 0,5 et 1,5 g/$m^2$ pour des supports non poreux.

Les compositions peuvent également contenir un composé cycloorganopolysiloxanique présentant des groupements vinyle et méthyle, de préférence sour forme d'un tétramère comme par exemple le tétraméthyl-1,3,5,7 tétravinyl-1,3,5,7 cyclotétrasiloxane.

D'autres avantages et caractéristiques de l'invention apparaitront à la lecture des exemples suivants donnés à titre illustratif nullement limitatif.

EXEMPLE 1

Un bain de traitement est préparé selon le mode opératoire suivant:

A 100 parties d'une composition de silicone renfermant:

a) 90,5 % d'un copolymère de polydiméthylsiloxane ayant des motifs vinyle dans la chaîne et à terminaison diméthylvinylsiloxy ayant environ 3 % en poids de groupements vinyle et présentant une viscosité d'environ 250 mPa.s. à 25° C,

b) 2,5 % de tétraméthyl-1,3,5,7 tétravinyl-1,3,5,7 cyclotétrasiloxane

c) 7 % d'un fluide polyméthylhydrogénosiloxanique à terminaison triméthylsiloxy utilisé comme agent de réticulation comprenant environ 1,5 % en poids d'atomes d'hydrogène liés au silicium, ayant une viscosité d'environ 20 mPa.s. à 25° C.

On ajoute à ce bain:

- 60 ppm de platine ($3.10^{-4}$ at.g. de Pt/kg de composition) sous la forme d'un complexe du platine préparé à partir de l'acide chloroplatinique et de divinyl-1,3 tétraméthyl-1,1,3,3 disiloxane, comme décrit dans le brevet US-A-3 814 730.

- 0,08 % en poids d'azodicarboxylate d'éthyle (ADCE), soit 4,6 $10^{-3}$ mole/kg de composition.

On agite vigoureusement, à température ambiante, le mélange pendant quelques minutes et on dépose ensuite ce mélange (environ 1 g/$m^2$) sans utiliser de solvant sur du papier, au moyen d'une barre d'enduction, on fait passer le papier enduit sous une lampe U.V. à une distance de 5,6 cm de la lampe et on fait durcir la

composition silicone dans un four à circulation d'air forcé règlé à 100° C. Le temps d'irradiation est de 0,20 s. La lampe U.V. utilisée est une lampe PHILIPS type HOK6 d'une puissance de 5000 W ayant une puissance linéaire de 8000 W par m.

On a ainsi étudié le durcissement du revêtement de silicone en notant le temps de séjour minimum dans le four avec ou sans traitement préalable aux U.V., nécessaire pour obtenir un revêtement bien durci. On mesure par ailleurs l'augmentation de viscosité de la composition en fonction du temps du bain catalysé pour juger de l'efficacité des azodicarboxylates en tant qu'inhibiteur. Les résultats obtenus sont rassemblés dans le tableau I ci-après.

EXEMPLES 2 A 6

On procède de la même façon que dans l'exemple 1 sauf que l'on modifie la quantité de l'inhibiteur ; les résultats sont rassemblés dans le tableau I ci-après:

**TABLEAU I**

| Exemple | Concentration en ADCE % | Concentration en ADCE moles/kg | Temps de réticulation Four à 110°C sans U.V. (s) | Temps de réticulation Four à 110°C avec U.V. (s) | Temps de gel à 20°C (heures) |
|---|---|---|---|---|---|
| 1 | 0,08 | $4,6.10^{-3}$ | 15 | 8 - 10 | 6 heures |
| 2 | 0,09 | $5,5.10^{-3}$ | 18 | 8 - 10 | 10 heures |
| 3 | 0,10 | $6.10^{-3}$ | 18-10 | 8 - 10 | 24 heures |
| 4 | 0,15 | $8,6.10^{-3}$ | 30 - 35 | 10 | 60heures |
| 5 | 0,20 | $1,15.10^{-2}$ | 80 | 10 - 12 | 30 jours |
| 6 | 0,30 | $1,7.10^{-2}$ | 100 | 15> | 30 jours |

EXEMPLES 7 A 10

A 100 g d'huile polydiméthylsiloxanique à terminaisons diméthylvinylsiloxy (0,4 % en poids de groupements vinyle par rapport au poids du polymère, de viscosité 600 mPa.s. à 25°C, on ajoute 41,5 g de silice de pyrogénation de surface spécifique 300 m²/g traitée par l'hexaméthyldisilazane. On ajoute à cet empâtage une composition organosilicique contenant:

(a) 4 g d'un copolymère polydiméthylsiloxanique ayant des motifs hydrogénométhylsiloxy dans la chaîne, présentant par rapport au poids du polymère 0,24 % d'atomes d'hydrogène liés au silicium et ayant environ 120 atomes de silicium par molécule et

(b) 4 g d'un polymère polydiméthylsiloxanique à terminaisons diméthylhydrogénosiloxyle de viscosité 30 mPa.s. à 25°C. On ajoute à cette composition un catalyseur au platine qui est le produit de la réaction de l'acide chloroplatinique sur l'octanol conformément à l'enseignement du brevet US-A-3 220 972 suivant une quantité telle que l'on ajoute 12 mg de platine métal par rapport au poids total de la composition.

On divise la composition en 4 parties égales et on ajoute des quantités croissantes d'azodicarboxylate d'éthyle (ADCE).

On évalue la stabilité du bain et le temps de réticulation à 150°C, mesuré sur un film de composition élastomérique de 500 µm d'épaisseur déposé sur un papier enduit de polyéthylène.

Les résultats obtenus sont rassemblés dans le tableau II ci-après:

**TABLEAU II**

| Exemple | Concentration en ADCE en % en poids | Temps de réticulation à 150°C en mn. et s. | Stabilité du bain en h. et mn. |
|---|---|---|---|
| 7 | 0,0083 | 1 mn | 3 h 30 |
| 8 | 0,0109 | 2 mn | > 72 h |
| 9 | 0,0130 | 2 mn 30 s | 8 jours |
| 10 | 0,018 | 2 mn 30 s | > 8 jours |

**Revendications**

1. Composition organopolysiloxanique, caractérisée en ce qu'elle comporte

(1) au moins un organonopolysiloxane sensiblement linéaire présentant une viscosité comprise entre environ 50 et 100 000 mPa.s à 25°C et contenant par molécule au moins x groupes hydrocarbonés à insaturation alcényle liés à un atome de silicium avec $x > 2$

(2) au moins un organohydrogénopolysiloxane ayant une viscosité comprise entre environ 10 et 100 000 mPa.s. à 25°C contenant par molécule au moins y atomes d'hydrogène liés à un atome de silicium avec $y > 2$ et

$x + y > 5$

(3) une quantité catalytiquement efficace d'un compose d'un métal du groupe du platine

(4) une quantité d'au moins un inhibiteur azodicarboxylate efficace pour inhiber la formation d'un gel à température ambiante mais en quantité insuffisante pour empêcher la réticulation lors du traitement de réticulation et présentant sur chacun des groupes carboxylate un radical organique n'exerçant pas d'influence défavorable sur l'activité catalytique du composé (3).

2. Composition selon la revendication 1, caractérisée en ce que l'inhibiteur (4) est choisi parmi les produits de formule:

$R_1OOc - N = N - COOR_2$ (I)

$R'_1OOC - N = N - COO-R-OOC-N = N - COOR'_2$ (II)

dans laquelle $R_1$, $R_2$, $R'_1$, $R'_2$ identiques ou différents représentant une chaîne alkyle linéaire ou ramifiée ayant de 1 à 12 atomes de carbone et R représente une chaîne alkylène de formule $-(CH_2)-_n$ avec n étant un nombre entier compris entre 1 et 12.

3. Composition selon l'une des revendications 1 et 2, caractérisée en ce que le composé (4) est l'azodicarboxylate d'éthyle.

4. Composition selon l'une quelconque des revendications 1 à 3, caractérisée en ce que le composé (1) comporte uniquement des groupes méthyle et vinyle et le composé (2) comporte uniquement des groupes méthyle et des groupes $\equiv$ SiH.

5. Composition selon l'une quelconque des revendications précédentes, caractérisée en ce qu'elle est dispersée dans un solvant organique volatile compatible avec ladite composition.

6. Composition de revêtement sans solvant selon l'une quelconque des revendications 1 à 4 caractérisée en ce qu'elle présente une viscosité ne dépassant pas 5000 mPa.s. à 25°C.

7. Procédé de réticulation d'une composition telle que définie à l'une quelconque des revendications 1 à 6 et disposée en couche mince, caractérisé en ce qu'au moins une partie de l'apport d'énergie pour ladite réticulation est fournie par un rayonnement U.V.

8. Procédé permettant de rendre des feuilles de matériau souples non adhérentes à des surfaces auxquelles elles adhèrent normalement, caractérisé en ce qu'il consiste à appliquer une quantité d'une composition telle que définie à la revendication 5 ou 6, comprise entre 0,1 à 5 g par $m^2$ de surface à enduire puis en ce que la réticulation de la composition est obtenue par un apport d'énergie dont au moins une partie est fournie par un rayonnement U.V.

9. Matériaux enduits d'une composition telle que définie à l'une quelconque des revendications 1 à 6.

**Patentansprüche**

1. Organopolysiloxanzusammensetzung, dadurch gekennzeichnet, daß sie enthält

(1) mindestens ein im wesentlichen lineares Organopolysiloxan mit einer Viskosität zwischen etwa 50 und 100000 mPa.s bei 25°C und enthaltend pro Molekül mindestens x Kohlenwasserstoffgruppen mit Alkenylunsättigung, die an ein Siliciumatom mit $x > 2$ gebunden sind,

(2) mindestens ein Organohydrogenpolysiloxan mit einer Viskosität zwischen etwa 10 und 100000 mPa.s bei 25°C, enthaltend pro Molekül mindestens y Wasserstoffatome, die an ein Siliciumatom mit $y > 2$ und $x + y > 5$ gebunden sind,

(3) eine katalytisch wirksame Menge einer Verbindung eines Metalls der Platingruppe,

(4) eine Menge mindestens eines Azodicarboxylatinhibitors, die wirksam ist, um die Bildung eines Gels bei Umgebungstemperatur zu inhibieren, jedoch in unzureichender Menge, um die Vernetzung bei der Vernetzungsbehandlung zu verhindern und die auf jedem der Carboxylatgruppen einen organischen Rest aufweist, der keinen nachteiligen Einfluß auf die katalytische Aktivität der Verbindung (3) ausübt.

2. Zusammensetzung gemäß Anspruch 1, dadurch gekennzeichnet, daß der Inhibitor (4) ausgewählt ist unter den Produkten der Formel:

$R_1OOC - N = N - COOR_2$ (I)

$R'_1OOC - N = N - COO-R-OOC-N = N - COOR'_2$ (II)

worin $R_1$, $R_2$, $R'_1$, $R'_2$ die identisch oder verschieden sind, eine gerade oder verzweigte Alkylkette mit 1 bis 12 Kohlenstoffatomen bedeutet und R eine Alkylenkette der Formel $-(CH_2)-_n$ darstellt, wobei n eine ganze Zahl zwischen 1 und 12 ist.

3. Zusammensetzung gemäß einem der Ansprüche 1 und 2, dadurch gekennzeichnet, daß die Verbindung (4) Ethylazodicarboxylat ist.

4. Zusammensetzung gemäß einem der Ansprüche 1 bis 3, dadurch gekennzeichnet, daß die Verbindung (1) nur Methyl- und Vinylgruppen enthält und die Verbindung (2) nur Methylgruppen und Gruppen $\equiv$ SiH enthält.

5. Zusammensetzung gemäß einem der vorhergehenden Ansprüche, dadurch gekennzeichnet, daß sie in einem flüchtigen organischen Lösungsmittel, das mit dieser Zusammensetzung verträglich ist, dispergiert ist.

6. Überzugszusammensetzung ohne Lösungsmittel gemäß einem der Ansprüche 1 bis 4, dadurch gekennzeichnet, daß sie eine Viskosität aufweist, die 5000 mPa.s bei 25°C nicht überschreitet.

7. Verfahren zur Vernetzung einer Zusammensetzung, wie sie in einem der Ansprüche 1 bis 6 definiert ist und in dünner Schicht vorliegt, dadurch gekennzeichnet, daß wenigstens ein Teil der Energiezufuhr für diese Vernetzung durch eine UV-Bestrahlung geliefert wird.

8. Verfahren, um biegsame Materialfolien nichthaftend zu machen auf Oberflächen, an denen sie normalerweise haften, dadurch gekennzeichnet, daß es darin besteht, eine Menge einer Zusammensetzung, wie sie in Anspruch 5 oder 6 definiert ist, zwischen 0,1 und 5 g pro $m^2$ zu überziehender Oberfläche aufzubringen und daß dann die Vernetzung der Zusammensetzung durch eine Energiezufuhr erhalten wird, von der wenigstens ein Teil durch eine UV-Bestrahlung geliefert wird.

9. Materialien, die mit einer Zusammensetzung überzogen sind, wie sie in einem der Ansprüche 1 bis 6 definiert ist.

**Claims**

1. An organopolysiloxane composition, characterised in that it incorporates

(1) at least one substantially straight-chain organopolysiloxane having a viscosity of between 50 and 100,000 mPa.s at 25°C and containing, per molecule, at least x hydrocarbon groups with alkenyl unsaturation which are bonded to a silicon atom, where $x > 2$

(2) at least one organohydropolysiloxane with a viscosity of between approximately 10 and 100,000 mPa.s at 25°C containing, per molecule, at least y hydrogen atoms bonded to a silicon atom with $y > 2$ and $x + y > 5$

(3) a catalytically effective quantity of a compound of a platinum group metal

(4) a quantity of at least one azodicarboxylate inhibitor effective in inhibiting the formation of a gel at ambient temperature but in an insufficient quantity to prevent crosslinking during the crosslinking treatment and bearing on each of the carboxylate groups an organic radical which does not exert an unfavourable influence on the catalytic activity of the compound (3).

2. A composition according to Claim 1, characterised in that the inhibitor (4) is chosen from the products of formula

$$R_1OOC-N=N-COOR_2 \quad (I)$$
$$R'_1OOC-N=N-COO-R-OOC-N=N-COOR'_2 \quad (II)$$

in which $R_1$, $R_2$, $R'_1$ and $R'_2$, which are identical or different, denote a straight or branched alkyl chain containing from 1 to 12 carbon atoms and R denotes an alkylene chain of formula $-(CH_2)_n-$, being an integer from 1 to 12.

3. A composition according to one of Claims 1 and 2, characterised in that the compound (4) is ethyl azodicarboxylate.

4. A composition according to any one of Claims 1 to 3, characterised in that the compound (1) contains only methyl and vinyl groups and the compound (2) contains only methyl groups and $\equiv$ SiH groups.

5. A composition according to any one of the preceding claims, characterised in that it is dispersed in a volatile organic solvent compatible with the said composition.

6. A solvent-free coating composition according to any one of Claims 1 to 4, characterised in that it has a viscosity not exceeding 5,000 mPa.s at 25°C.

7. A process for crosslinking a composition such as defined in any one of Claims 1 to 6 and formed into a thin layer, characterised in that at least a part of the energy input for the said crosslinking is provided by UV radiation.

8. A process permitting sheets of a flexible material to be rendered non-adhesive to surfaces to which they normally adhere, characterised in that it consists in applying a quantity of a composition such as defined in Claim 5 or 6, of between 0.1 and 5 g per $m^2$ of the surface to be coated and then in that the crosslinking of the composition is produced by an input of energy at least a part of which is provided by UV radiation.

9. Materials coated with a composition such as defined in any one of Claims 1 to 6.